# EUROPEAN PATENT APPLICATION

(11) **EP 3 882 303 A1**
(43) Date of publication of application: **22.09.2021**
(21) Application number: 19884103.3
(22) Date of filing: 11.11.2019
(51) Int. Cl.: C08J 5/04, C08J 5/24, C08G 18/58

(54) **HEAT-CURABLE MOLDING MATERIAL, FIBER-REINFORCED COMPOSITE MATERIAL, HEAT-CURABLE EPOXY RESIN COMPOSITION FOR FIBER-REINFORCED PLASTIC, PRODUCTION METHOD FOR HEAT-CURABLE MOLDING MATERIAL, AND FIBER-REINFORCED PLASTIC**

(30) Priority: 12.11.2018 JP 2018211992
(71) Applicant: Mitsubishi Chemical Corporation, Chiyoda-ku Tokyo 100-8251 (JP)
(72) Inventor: USHIYAMA Hisaya, Tokyo 100-8251 (JP); WATANABE Yusuke, Tokyo 100-8251 (JP); MUKOUZAKA Natsumi, Tokyo 100-8251 (JP); OGASAWARA Hayato, Tokyo 100-8251 (JP); OTA Akira, Tokyo 100-8251 (JP)
(74) Representative: Hoffmann Eitle
(86) International application number: PCT/JP2019/044052
(87) International publication number: WO 2020/100785

(57) **Abstract**

The invention provides a novel heat-curable molding material containing a matrix resin that has been partially-cured by the action of a polyisocyanate, and a reinforcing fiber. The heat-curable molding material of one embodiment of the present invention contains a matrix resin containing a reaction product (I) of an epoxy compound (A1) represented by general formula (a1) shown below and a polyisocyanate (D), and a reinforcing fiber.

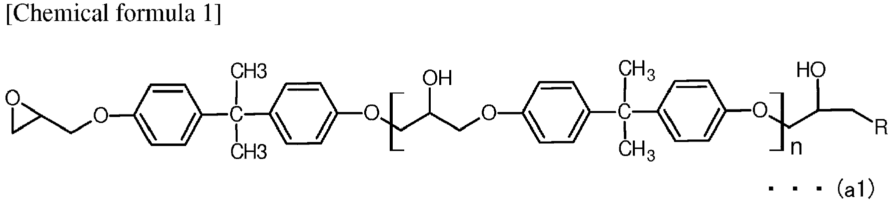

## Description

### TECHNICAL FIELD

The present invention relates mainly to a heat-curable molding material, a fiber-reinforced composite, a heat-curable epoxy resin composition for a fiber-reinforced plastic, a production method for a heat-curable molding material, and a fiber-reinforced plastic.

Priority is claimed on Japanese Patent Application No. 2018-211992, filed November 12, 2018, the content of which is incorporated herein by reference.

### BACKGROUND ART

Fiber-reinforced plastics (hereafter also referred to as "FRP"), which are one type of fiber-reinforced composite, are lightweight and have superior strength and high rigidity, and are therefore widely used in applications from sports and leisure through to industrial applications such as automobiles and aircraft.

FRP products can be produced via formation of intermediate materials known as sheet molding compounds (hereafter also referred to as "SMC") and bulk molding compounds (hereafter also referred to as "BMC"). SMCs found an initial practical use in the early 1970s, and have recently found increase in demand in the production of industrial components, automobile components and bathtubs and the like. SMCs and BMCs are obtained by impregnating reinforcing fibers with a heat-curable resin composition, and then partially curing (also known as B-staging) the heat-curable resin composition contained in the impregnated material. By heating and compressing an SMC or BMC inside a mold, thereby fully curing the partially-cured heat-curable resin composition contained in the SMC or BMC, FRP can be obtained.

Using epoxy resins as the heat-curable resin for an SMC or BMC has already been studied, and for example, an epoxy resin composition comprising an epoxy resin having 1.5 or less hydroxy groups per molecule in average, a polyol, a polyisocyanate compound, dicyandiamide and a specific imidazole compound has been proposed as a heat-curable resin composition for an SMC (Patent Document 1).

### PRIOR ART LITERATURE

### Patent Document

Patent Document 1: Japanese Unexamined Patent Application, First Publication No. Hei 04-88011

### SUMMARY OF INVENTION

### Problems to be Solved by the Invention

One object of the present invention is to provide a novel heat-curable molding material containing a matrix resin partially-cured by the action of a polyisocyanate, and a reinforcing fiber.

Further, another object of the present invention is to provide a novel heat-curable epoxy resin composition for FRP, which is ideal as a raw material for SMCs and BMCs, and thickens under the action of a polyisocyanate.

### Means for Solving the Problems

Embodiments of the present invention include the following aspects.
[1] A heat-curable molding material comprising:
   a matrix resin containing a reaction product (I) of an epoxy compound (Al) represented by general formula (a1) shown below and a polyisocyanate (D), and
   a reinforcing fiber. 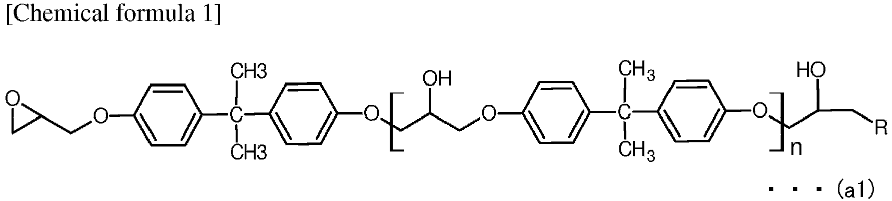
   [In the formula, n represents an integer of 0 or more, and R represents a hydroxy group, a halogen atom, or an alkyl group having 1 to 10 carbon atoms.]
[2] The heat-curable molding material according to [1], wherein in the above formula (a1), n is an integer of 0 to 5, and R is a chlorine atom.
[3] The heat-curable molding material according to [1] or [2], wherein a viscosity at 23°C of the matrix resin is within a range from 5,000 to 150,000 Pa·s.
[4] The heat-curable molding material according to any one of [1] to [3], wherein the matrix resin is a partially-cured product of a heat-curable epoxy resin composition in which a bisphenol type liquid epoxy resin (B) is blended.
[5] The heat-curable molding material according to any one of [1] to [4], wherein the matrix resin is a partially-cured product of a heat-curable epoxy resin composition comprising an epoxy resin compound represented by formula (b) shown below. 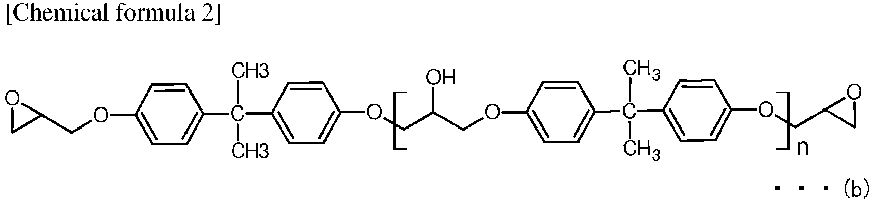 [In the formula, n represents an integer of 0 to 5.]
[6] The heat-curable molding material according to [4] or [5], wherein an amine type epoxy resin (C) is blended in the heat-curable epoxy resin composition.
[7] The heat-curable molding material according to any one of [1] to [6], wherein the reinforcing fiber is a carbon fiber.
[8] The heat-curable molding material according to any one of [1] to [7], which is a sheet molding compound.
[9] The heat-curable molding material according to any one of [1] to [7], which is a bulk molding compound.
[10] A fiber-reinforced composite obtained by molding the heat-curable molding material according to any one of [1] to [9].
[11] A heat-curable epoxy resin composition for FRP, prepared by blending a bisphenol type epoxy resin, a polyol and a polyisocyanate, and having a viscosity of 25 Pa·s or less at 25°C, wherein
   the polyol has a structure in which a modification is applied to an epoxy resin compound contained in the bisphenol type epoxy resin, the modification being a ring-opening of an epoxy group causing formation of a hydroxy group.
[12] A heat-curable epoxy resin composition for FRP, prepared by blending a bisphenol type epoxy resin, a polyol and a polyisocyanate, and having a viscosity of 25 Pa·s or less at 25°C, wherein
   the polyol has a structure in which a modification is applied to an epoxy resin compound which is soluble in the bisphenol type epoxy resin, the modification being a ring-opening of an epoxy group causing formation of a hydroxy group.
[13] The heat-curable epoxy resin composition for FRP according to [12], wherein the polyol has a structure in which the modification is applied to a diglycidyl ether type epoxy resin compound that may have a bisphenol type skeleton.
[14] The heat-curable epoxy resin composition for FRP according to any one of [11] to [13], wherein the modification is a ring-opening of an epoxy group that causes formation of a hydroxy group and a halogen group.
[15] The heat-curable epoxy resin composition for FRP according to [14], wherein the halogen group is a chloro group.
[16] The heat-curable epoxy resin composition for FRP according to any one of [11] to [15], wherein the polyol comprises at least one polyol selected from among polyols represented by formula (a2-1) shown below and polyols represented by formula (a2-2) shown below. 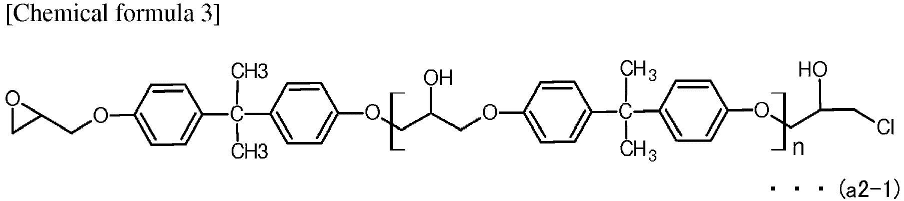 [In the formula, n represents an integer of 1 or more.] 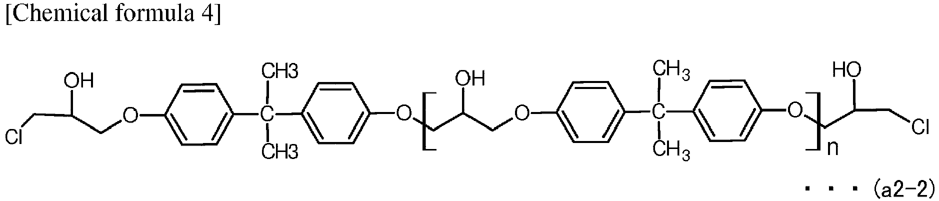 [In the formula, n represents an integer of 0 or more.]
[17] The heat-curable epoxy resin composition for FRP according to [16], wherein in formula (a2-1) and formula (a2-2), n is 5 or less.
[18] The heat-curable epoxy resin composition for FRP according to any one of [11] to [17], wherein the bisphenol type epoxy resin comprises an epoxy resin compound represented by formula (b) shown below. 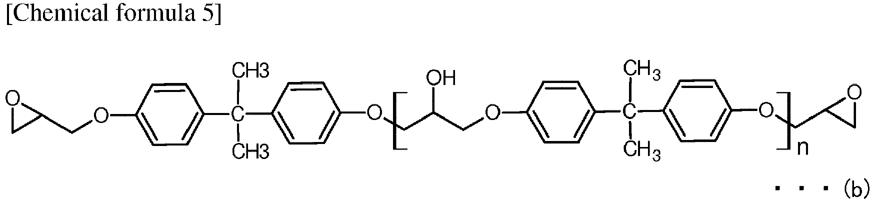 [In the formula, n represents an integer of 0 or more.]
[19] The heat-curable epoxy resin composition for FRP according to [18], wherein in formula (b), n is an integer of 0 to 5.
[20] The heat-curable epoxy resin composition for FRP according to any one of [11] to [19], wherein an amine type epoxy resin is blended in the heat-curable epoxy resin composition.
[21] The heat-curable epoxy resin composition for FRP according to any one of [11] to [20], wherein when left to stand at 23°C, the viscosity at 23°C increases to 5,000 Pa·s or more within 21 days.
[22] The heat-curable epoxy resin composition for FRP according to any one of [11] to [20], wherein when left to stand at 23°C, the viscosity at 23°C increases to 5,000 Pa·s or more within 14 days.
[23] The heat-curable epoxy resin composition for FRP according to any one of [11] to [20], wherein when left to stand at 23°C, the viscosity at 23°C increases to 5,000 Pa·s or more within 7 days.
[24] The heat-curable epoxy resin composition for FRP according to any one of [21] to [23], wherein when left to stand at 23°C, the viscosity at 23°C after 21 days is 150,000 Pa·s or less, and preferably 70,000 Pa·s or less.
[25] A production method for a heat-curable molding material, the method comprising impregnating a reinforcing fiber with the heat-curable epoxy resin composition for FRP according to any one of [11] to [24], and partially curing the heat-curable epoxy resin composition for FRP with which the reinforcing fiber is impregnated.
[26] The production method for a heat-curable molding material according to [25], wherein the reinforcing fiber is a carbon fiber.
[27] The production method according to [25] or [26], wherein the heat-curable molding material is an SMC or a BMC.
[28] A heat-curable molding material comprising a partially-cured product of the heat-curable epoxy resin composition for FRP according to any one of [11] to [24] and a reinforcing fiber.
[29] The heat-curable molding material according to [28], wherein the reinforcing fiber is a carbon fiber.
[30] The heat-curable molding material according to [28] or [29], which is an SMC or a BMC.
[31] FRP comprising a molded article of the heat-curable molding material according to any one of [28] to [30].
[32] The FRP according to [31], which is a component of a transport machine.

### Effects of the Invention

One aspect of the present invention provides a novel heat-curable molding material containing a matrix resin that has been made partially-cured by the effect of a polyisocyanate, and a reinforcing fiber.

Further, another aspect of the present invention provides a novel heat-curable epoxy resin composition for FRP, which is ideal as a raw material for SMCs and BMCs, and, the viscosity of which increases by the effect of a polyisocyanate.

### EMBODIMENTS FOR CARRYING OUT THE INVENTION

The present invention is described below in further detail.

An "epoxy compound" is a compound having one or more epoxy groups in the molecule.

An "epoxy resin compound" is a compound having two or more epoxy groups in the molecule.

An "epoxy resin" is a resin comprising one or more epoxy resin compounds.

A "polyol" is a compound having two or more hydroxy groups in the molecule.

A "polyisocyanate" is a compound having two or more isocyanate groups in the molecule.

An expression such as "a to b" denoting a numerical range means a range that includes the numerical values of a and b as the lower limit and upper limit respectively.

In this description, a halogen atom bonded to a carbon atom is also referred to as a halogen group. For example, a chlorine atom bonded to a carbon atom is also referred to as a chloro group.

### 1. Heat-Curable Molding Material

The heat-curable molding material of one aspect of the present invention includes a matrix resin containing a reaction product (I) of an epoxy compound (Al) represented by general formula (a1) shown above and a polyisocyanate (D), and a reinforcing fiber.

In formula (a1), n is preferably an integer of 0 to 5, and more preferably an integer of 0 to 3. R is preferably a halogen atom, and more preferably a chlorine atom.

In the following description, this heat-curable molding material is called the first heat-curable molding material.

In the first heat-curable molding material, owing to the thickening action of the reaction product (I), the matrix resin is in a partially-cured state (with a room temperature viscosity of about 5,000 Pa·s to 150,000 Pa·s). The component (A1) and the component (D) produce the reaction product (1) in a short time.

The first heat-curable molding material can be obtained, for example, by impregnating a reinforcing fiber with an epoxy resin composition containing the component (Al) and the component (D), and then holding the resulting mixture at room temperature for about 1 day to 3 weeks to allow partial-curing of the epoxy resin composition used in the impregnation. Time required for the partial-curing can be shortened by increasing the holding temperature.

The amount of the matrix resin (hereafter referred to as the "resin content") in the first heat-curable molding material, relative to the total mass (100% by mass) of the molding material, is preferably 25% by mass or more, more preferably 30% by mass or more, and even more preferably 35% by mass or more. Further, the resin content in the first heat-curable molding material, relative to the total mass (100% by mass) of the molding material, is preferably 70% by mass or less, more preferably 65% by mass or less, and even more preferably 60% by mass or less. For example, the resin content in the first heat-curable molding material, relative to the total mass (100% by mass) of the molding material, is preferably from 25% by mass to 70% by mass, more preferably from 30% by mass to 65% by mass, and even more preferably from 35% by mass to 60% by mass. When the resin content in the first heat-curable molding material falls within the above range, the adhesion between the reinforcing fiber and the matrix resin in a cured product of the heat-curable molding material is particularly favorable, and therefore the cured product of the heat-curable molding material exhibits favorable mechanical properties.

The viscosity at 23°C of the matrix resin in the first heat-curable molding material is within a range from 5,000 Pa·s to 150,000 Pa·s. The viscosity is preferably 100,000 Pa·s or less, and more preferably 70,000 Pa·s or less. For example, the viscosity at 23°C of the matrix resin in the first heat-curable molding material is typically from 5,000 Pa·s to 150,000 Pa·s, preferably from 5,000 Pa·s to 100,000 Pa·s, and more preferably from 5,000 Pa·s to 70,000 Pa·s. When the viscosity at 23°C of the matrix resin is at least as high as the above lower limit, surface stickiness of the first heat-curable molding material can be suppressed. When the viscosity at 23°C of the matrix resin is not more than the above upper limit, the first heat-curable molding material exhibits favorable drapability by heating as necessary.

### <Epoxy Resin Composition>

The matrix resin contained in the first heat-curable molding material may be a partially-cured product of a heat-curable epoxy resin composition. In the following description, this heat-curable epoxy resin composition is called the "first epoxy resin composition".

The first epoxy resin composition is a mixture of a component (A1), a component (D), a component (B) and a component (E). The first epoxy resin composition may also contain a component (C), a component (F), a component (G), and additives that may be added as optional components.

### <Component (A1)>

The component (Al) is an epoxy compound represented by formula (a1) shown above. The component (A1) reacts with the polyisocyanate of component (D) to produce a reaction product (I).

The amount of the component (A1), per 100 parts by mass of all the epoxy resin to be blended in the first epoxy resin composition, may be adjusted appropriately within a range from 5 parts by mass or more, preferably 10 parts by mass or more, and more preferably 12 parts by mass or more, to 30 parts by mass or less, preferably 25 parts by mass or less, and more preferably 20 parts by mass or less.

When the amount of the component (Al) falls within the above range, the first epoxy resin composition tends to readily undergo partial-curing (B-staging), and the viscosity after the partial-curing is more easily maintained within the preferred range. In such cases, SMCs and BMCs obtained using the first epoxy resin composition can have no voids, have little surface stickiness, and exhibit favorable drapability.

Examples of epoxy resin products containing the component (Al) include jER (a registered trademark, this also applies below) 828XA manufactured by Mitsubishi Chemical Corporation. This product comprises epoxy compounds represented by formula (a2-1) shown above (wherein n in the formula is an integer of 0 to 5), and epoxy resin compounds represented by formula (b) shown above (wherein n in the formula is an integer of 0 to 5).

### <Component (B)>

The component (B) is a bisphenol type liquid epoxy resin. Here, the term "liquid" means the epoxy resin is liquid at normal temperature (23°C). The component (B) is the main component of the first epoxy resin composition, and strongly affects the strength, elastic modulus and heat resistance of the cured product of the first heat-curable molding material.

The component (B) is preferably a bisphenol A type epoxy resin or a bisphenol F type epoxy resin.

The blend amount of the component (B), relative to the total mass of epoxy resin to be blended in the first epoxy resin composition, is 50% by mass or more, preferably 70% by mass or more, and more preferably 90% by mass or more.

When the blend amount of the component (B) falls within the above range, an SMC or BMC having appropriate levels of tackiness and drapability can be obtained, and the cured product can exhibit favorable strength and elastic modulus.

Examples of bisphenol A type liquid epoxy resin products that are available as commercial products include jER825, jER827, jER828, jER834, jER1055, jER1004, jER1007, jER1009, jER1010 (all manufactured by Mitsubishi Chemical Corporation), YD-127, YD-128, YD-902, YD-903N, YD-904, YD-907, YD-7910, YD-6020 (all manufactured by Nippon Steel Chemical & Material Co., Ltd.), EPICLON (a registered trademark, this also applies below) 840, EPICLON 850, EPICLON 2050, EPICLON 3050, EPICLON 4050, EPICLON 7050, EPICLON HM-091, EPICLON HM-101 (all manufactured by DIC Corporation), and D.E. R331 and D.E. R332 (manufactured by The Dow Chemical Company).

Examples of bisphenol F type liquid epoxy resin products that are available as commercial products include jER806, jER807, jER4004P, jER4005P, jER4007P, jER4010P (all manufactured by Mitsubishi Chemical Corporation), YDF-170, YDF-2004 and YDF-2005RD (all manufactured by Nippon Steel Chemical & Material Co., Ltd.), EPICLON 830 and EPICLON 835 (both manufactured by DIC Corporation), and D.E. R354 (manufactured by The Dow Chemical Company).

One of these commercially available bisphenol type liquid epoxy resin products may be used alone, and a combination of two or more such products may be used.

### <Component (C)>

The component (C) is an amine type epoxy resin, and examples of compounds that may be used include amine type epoxy resins such as tetraglycidyldiaminodiphenylmethane, tetraglycidyldiaminodiphenyl ether, triglycidylaminophenol, diglycidylaniline, triglycidylaminocresol, and tetraglycidylxylylenediamine; epoxy resins having a triglycidyl isocyanurate skeleton; and halogen- or alkyl-substituted products or hydrogenated products of these resins. The component (C) can mainly contribute to improving strength, elastic modulus and heat resistance of the cured product of the first epoxy resin composition, and improving adhesion to the reinforcing fiber.

When added, the amount of the component (C), relative to the total mass of epoxy resin to be blended in the first epoxy resin composition, may be set, for example, within a range from 3 to 30% by mass, and is preferably 25% by mass or less, and more preferably 20% by mass or less.

Examples of amine type epoxy resin products that are available as commercial products include jER630 and jER604 (both manufactured by Mitsubishi Chemical Corporation), YH-434 and YH-434L (both manufactured by Nippon Steel Chemical & Material Co., Ltd.), SUMI-EPOXY (a registered trademark) ELM434 (manufactured by Sumitomo Chemical Co., Ltd.), TEPIC (a registered trademark, this also applies below) - G, TEPIC-S, TEPIC-SP, TEPIC-SS, TEPIC-PAS B26L, TEPIC-PAS B22, TEPIC-VL and TEPIC-UC (all manufactured by Nissan Chemical Corporation), TETRAD (a registered trademark, this also applies below) -X and TETRAD-C (both manufactured by Mitsubishi Gas Chemical Co., Inc.), MY0500, MY0510, MY0600, MY0610, MY0720, MY0721 and MY0725 (all manufactured by Huntsman Japan Co., Ltd.), and GAN and GOT (both manufactured by Nippon Kayaku Co., Ltd.).

One of these commercially available amine type epoxy resin products may be used alone, and a combination of two or more such products may be used.

### <Component (D)>

The component (D) is a polyisocyanate. When added together with the component (A1), the component (D), as a thickener, contributes to the partial-curing (B-staging) of the first epoxy resin composition.

The blend amount of the component (D), per 100 parts by mass of all the epoxy resin to be blended in the first epoxy resin composition, may be adjusted appropriately within a range from 5 parts by mass or more, and preferably 10 parts by mass or more, to 30 parts by mass or less, and preferably 25 parts by mass or less. When the blend amount of the component (D) falls within the above range, the first epoxy resin composition tends to readily undergo partial-curing (B-staging), and the partially-cured product can exhibit appropriate levels of tackiness and viscosity. Moreover, the molded article can exhibit favorable strength and elastic modulus.

Examples of the polyisocyanate compound include, but are not limited to, difunctional isocyanate compounds such as methane diisocyanate, butane-1,1-diisocyanate, ethane-1,2-diisocyanate, butane-1,2-diisocyanate, *trans-*vinylene diisocyanate, propane-1,3-diisocyanate, butane-1,4-diisocyanate, 2-butene-1,4-diisocyanate, 2-methylbutene-1,4-diisocyanate, 2-methylbutane-1,4-diisocyanate, pentane-1,5-diisocyanate, 2,2-dimethylpentane-1,5-diisocyanate, hexane-1,6-diisocyanate, heptane-1,7-diisocyanate, octane-1,8-diisocyanate, nonane-1,9-diisocyanate, decane-1,10-diisocyanate, dimethylsilane diisocyanate, diphenylsilane diisocyanate, ω,ω'-1,3-dimethylbenzene diisocyanate, ω,ω'-1,4-dimethylbenzene diisocyanate, ω,ω'-1,3-dimethylcyclohexane diisocyanate, ω,ω'-1,4-dimethylcyclohexane diisocyanate, ω,ω'-1,4-dimethylnaphthalene diisocyanate, ω,ω'-1,5-dimethylnaphthalene diisocyanate, cyclohexane-1,3-diisocyanate, cyclohexane-1,4-diisocyanate, 3-isocyanatomethyl-3,5,5-trimethylcyclohexyl isocyanate, dicyclohexylmethane-4,4'-diisocyanate, 1,3-phenylene diisocyanate, 1,4-phenylene diisocyanate, 1-methylbenzene-2,4-diisocyanate, 1-methylbenzene-2,5-diisocyanate, 1-methylbenzene-2,6-diisocyanate, 1-methylbenzene-3,5-diisocyanate, diphenyl ether-4,4'-diisocyanate, diphenyl ether-2,4'-diisocyanate, naphthalene-1,4-diisocyanate, naphthalene-1,5-diisocyanate, biphenyl-4,4'-diisocyanate, 3,3'-dimethylbiphenyl-4,4'-diisocyanate, 2,3'-dimethoxybisphenyl-4,4'-diisocyanate, diphenylmethane-4,4'-diisocyanate, 3,3'-dimethoxydiphenylmethane-4,4'-diisocyanate, 4,4'-dimethoxydiphenylmethane-3,3'-diisocyanate, norbornene diisocyanate, diphenyl sulfide-4,4'-diisocyanate, diphenylsulfone-4,4'-diisocyanate, and isophorone diisocyanate; polyfunctional isocyanate compounds such as polymethylene polyphenyl isocyanate, triphenylmethane triisocyanate, tris(4-phenyl isocyanate thiophosphate), and 3,3',4,4'-diphenylmethane tetraisocyanate; as well as multimers such as dimers and trimers of the above isocyanate compounds, and blocked isocyanates and bisurethane compounds that have been masked with an alcohol or phenol or the like.

One compound selected from among these compounds may be used alone as the component (D), and a combination of two or more compounds may be used.

Among the above polyisocyanate compounds, difunctional and trifunctional isocyanate compounds are preferred, difunctional isocyanate compounds are more preferred, and difunctional isocyanate compounds having a skeleton selected from among isophorone, benzene, toluene, diphenylmethane, naphthalene, norbornene, polymethylene polyphenylene polyphenyl, and hexamethylene are particularly desirable. When the number of functional groups of the polyisocyanate compound is, for example, 3 or less, storage stability of the first heat-curable molding material is less likely to deteriorate.

Examples of polyisocyanate products that are available as commercial products include Lupranate (a registered trademark, this also applies below) MS, Lupranate MI, Lupranate M20S, Lupranate M11S, Lupranate M5S, Lupranate MP-102, Lupranate MM-103, Lupranate MB-301 and Lupranate T-80 (all manufactured by BASF INOAC Polyurethanes Ltd.), TAKENATE (a registered trademark, this also applies below) 500 and TAKENATE 600 (both manufactured by Mitsui Chemicals Inc.), BURNOCK (a registered trademark, this also applies below) DN-902S, BURNOCK DN-955-S, BURNOCK DN-980S, BURNOCK DN-990-S and BURNOCK DN-992-S (all manufactured by DIC Corporation), and isophorone diisocyanate (manufactured by Tokyo Chemical Industry Co., Ltd.).

### <Component (E)>

The component (E) is an epoxy resin curing agent. Examples of compounds that can be used as the component (E) include dicyandiamide, ureas, imidazoles, aromatic amines, other amine-based curing agents, acid anhydrides, and boron chloride amine complexes, and using at least one curing agent selected from among dicyandiamide, ureas, imidazoles and aromatic amines is particularly preferred.

Dicyandiamide has a high melting point, and is largely insoluble in epoxy resins in low-temperature regions. As a result, when dicyandiamide is used as the component (E), storage stability of the first heat-curable molding material can be improved. Dicyandiamide can also contribute to an improvement in the mechanical properties of the fiber-reinforced composite obtained by curing the first heat-curable molding material.

When dicyandiamide is used, the blend amount of the dicyandiamide is preferably set to an amount that yields a ratio of the molar amount of active hydrogen in the dicyandiamide, relative to the total molar amount of epoxy groups in the epoxy resins to be blended in the first epoxy resin composition, within a range from 0.4 to 1. When the ratio of the molar amount of active hydrogen in the dicyandiamide is at least as high as the above lower limit, the heat resistance, strength and elastic modulus of the cured product can be improved. Further, when the ratio of the molar amount of active hydrogen in the dicyandiamide is not more than the above upper limit, plastic deformation capacity and impact resistance of the cured product can be improved. Moreover, when the ratio of the molar amount of active hydrogen in the dicyandiamide is from 0.5 to 0.8, heat resistance of the fiber-reinforced composite obtained by curing the first heat-curable molding material is particularly desirable.

Examples of commercially available products of dicyandiamide include DICY7 and D1CY15 (both manufactured by Mitsubishi Chemical Corporation), and DICYANEX 1400F (manufactured by Air Products and Chemicals, Inc.).

Urea that may be used as the component (E) is a compound having a dimethylureido group in a molecule which produce an isocyanate group and dimethylamine upon heating at high temperature, which then activate the epoxy groups of the component (A1), the component (B) and the component (C), and any other epoxy resins that may also be used. Examples include aromatic dimethylureas in which the dimethylureido group is bonded to an aromatic ring, and aliphatic dimethylureas in which the dimethylureido group is bonded to an aliphatic compound. Among these, in terms of increasing curing rate of the first epoxy resin composition and improving heat resistance and flexural strength of the fiber-reinforced composite obtained by curing the first heat-curable molding material, an aromatic dimethylurea is preferred.

Examples of compounds that can be used favorably as the aromatic dimethylurea include phenyldimethylurea, methylenebis(phenyldimethylurea) and tolylenebis(dimethylurea), and specific examples include 4,4'-methylenbis(phenyldimethylurea) (MBPDMU), 3-phenyl-1,1-dimethylurea (PDMU), 3-(3,4-dichlorophenyl)-1,1 -dimethylurea (DCMU), 3-(3-chloro-4-methylphenyl)-1,1-dimethylurea, 2,4-bis(3,3-dimethylureido)toluene (TBDMU), and dimethylurea obtained from m-xylylene diisocyanate and dimethylamine. Among these, in terms of curing acceleration capability and imparting heat resistance to the cured product, DCMU, MBPDMU, TBDMU and PDMU are preferred.

One of these compounds may be used alone, and a combination of two or more compounds may be used.

Examples of the aliphatic dimethylurea include dimethylurea obtained from isophorone diisocyanate and dimethylamine, and dimethylurea obtained from hexamethylene diisocyanate and dimethylamine.

Commercially available products of DCMU include DCMU-99 (manufactured by Hodogaya Chemical Co., Ltd.).

Commercially available products of MBPDMU include Technicure MDU-11 (manufactured by A&C Catalysts, Inc.), and Omicure (a registered trademark, this also applies below) 52 (manufactured by PTI Japan Ltd.).

Commercially available products of PDMU include Omicure 94 (manufactured by PTI Japan Ltd.).

Commercially available products of TBDMU include Omicure 24 (manufactured by PTI Japan Ltd.), and U-CAT 3512T (manufactured by San-Apro Ltd.).

Commercially available products of aliphatic dimethylurea include U-CAT 3513N (manufactured by San-Apro Ltd.).

When a urea is used, the blend amount of the urea, per 100 parts by mass of all the epoxy resin to be blended in the first epoxy resin composition, is preferably within a range from 1 to 15 parts by mass, and more preferably from 2 to 10 parts by mass. When the blend amount of the urea is at least as large as the above lower limit, mechanical properties and heat resistance of the cured product can be improved. Further, when the blend amount of the urea is not more than the above upper limit, toughness of the fiber-reinforced composite obtained by curing the first heat-curable molding material can be improved.

Examples of imidazoles that may be used as the component (E) include imidazole compounds having an imidazole skeleton, as well as imidazole adducts, imidazole clathrate, microencapsulated imidazoles, and imidazole derivatives having a coordinated stabilizer.

Imidazoles have a nitrogen atom having an unshared electron pair within the structure, and this nitrogen atom activates the epoxy groups of the component (A), the component (B) and the component (C), and also activates any other epoxy resins that may also be used.

Specific examples of these imidazoles include, but are not limited to, 2-methylimidazole, 2-ethyl-4-methylimidazole, 2-undecylimidazole, 2-heptadecylimidazole, 1,2-dimethylimidazole, 2-phenylimidazole, 2-phenyl-4-methylimidazole, 1-benzyl-2-phenylimidazole, 1-benzyl-2-methylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 1-cyanoethyl-2-ethyl-4-methylimidazolium trimellitate, 1-cyanoethyl-2-undecylimidazolium trimellitate, 1-cyanoethyl-2-phenylimidazolium trimellitate, 2,4-diamino-6-(2'-methylimidazolyl-(1'))-ethyl-s-triazine, 2,4-diamino-6-(2'-undecylimidazolyl-(1'))-ethyl-s-triazine, 2,4-diamino-6-(2'-ethyl-4-methylimidazolyl-(1'))-ethyl-s-triazine, 2,4-diamino-6-(2'-methylimidazolyl-(1'))-ethyl-s-triazine-isocyanuric acid adduct, 2-phenylimidazole-isocyanuric acid adduct, 2-methylimidazole-isocyanuric acid adduct, 1-cyanoethyl-2-phenyl-4,5-di(2-cyanoethoxy)methylimidazole, 2-phenyl-4,5-dihydroxymethylimidazole, and 2-phenyl-4-methyl-5-hydroxymethylimidazole.

Imidazoles of which activity is lowered by an adduct treatment, an clathrate treatment within a different molecule or a microencapsulation treatment, or by coordination of a stabilizer, impart favorable storage stability to the epoxy resin composition in low-temperature region, and also exhibit a superior curing acceleration capability.

Examples of commercially available products of imidazole compounds include 2E4MZ, 2P4MZ, 2PZ-CN, C11Z-CNS, C11Z-A, 2MZA-PW, 2MA-OK, 2P4MHZ-PW and 2PHZ-PW (all manufactured by Shikoku Chemicals Corporation).

Examples of commercially available products of imidazole adducts include products having structures in which an imidazole compound has undergone a ring-opening addition to the epoxy groups of an epoxy resin, such as PN-50, PN-50J, PN-40, PN-40J, PN-31, PN-23 and PN-H (all manufactured by Ajinomoto Fine-Techno Co., Inc.).

Examples of commercially available products of imidazole clathrates includeTIC-188, KM-188, HIPA-2P4MHZ, NIPA-2P4MHZ, TEP-2E4MZ, HIPA-2E4MZ and NIPA-2E4MZ (all manufactured by Nippon Soda Co., Ltd.).

Examples of commercially available products of microencapsulated imidazoles include Novacure (a registered trademark) HX3721, HX3722, HX3742 and HX3748 (all manufactured by Asahi Kasei E-Materials Corporation); and LC-80 (manufactured by A&C Catalysts, Inc.).

Further, an imidazole derivative having a coordinated stabilizer can be prepared, for example, by combining an imidazole adduct CUREDUCT (a registered trademark, this also applies below) P-0505 (a bisphenol A diglycidyl ether / 2-ethyl-4-methylimidazole adduct) manufactured by Shikoku Chemicals Corporation with a stabilizer L-07N (an epoxy-phenol-borate ester blend) manufactured by Shikoku Chemicals Corporation. A similar effect can be obtained by using various imidazole compounds or imidazole derivatives such as imidazole adducts mentioned above instead of the CUREDUCT P-0505. A compound that exhibits low solubility in epoxy resins can be used favorably as the imidazole compound prior to coordination of the stabilizer, and in this regard, CUREDUCT P-0505 is preferred.

When an imidazole is used, the blend amount of the imidazole, per 100 parts by mass of all the epoxy resin to be blended in the first epoxy resin composition, is preferably within a range from 1 to 15 parts by mass, and more preferably from 2 to 10 parts by mass. When the blend amount of the imidazole is at least as large as the above lower limit, heat resistance of the cured product of the first epoxy resin composition can be further improved. When the blend amount of the imidazole is not more than the above upper limit, mechanical properties of the fiber-reinforced composite obtained by curing the first heat-curable molding material can be further improved.

Examples of aromatic amines that may be used as the component (E) include, but are not limited to, 3,3'-diisopropyl-4,4'-diaminodiphenylmethane, 3,3'-di-t-butyl-4,4'-diaminodiphenylmethane, 3,3'-diethyl-5,5'-dimethyl-4,4'-diaminodiphenylmethane, 3,3'-diisopropyl-5,5'-dimethyl-4,4'-diaminodiphenylmethane, 3,3'-di-t-butyl-5,5'-dimethyl-4,4'-diaminodiphenylmethane, 3,3',5,5'-tetraethyl-4,4'-diaminodiphenylmethane, 3,3'-diisopropyl-5,5'-diethyl-4,4'-diaminodiphenylmethane, 3,3'-di-t-butyl-5,5'-diethyl-4,4'-diaminodiphenylmethane, 3,3',5,5'-tetraisopropyl-4,4'-diaminodiphenylmethane, 3,3'-dit-butyl-5,5'-diisopropyl-4,4'-diaminodiphenylmethane, 3,3',5,5'-tetra-t-butyl-4,4'-diaminodiphenylmethane, 4,4'-diaminodiphenylmethane, 4,4'-diaminodiphenylsulfone, 3,3'-diaminodiphenylsulfone, m-phenylenediamine, m-xylylenediamine, diethyltoluene diamine, meta-phenylenediamine, diaminodiphenylmethane and meta-xylylenediamine. Among these, using 4,4'-diaminodiphenylsulfone and 3,3'-diaminodiphenylsulfone is preferred, as these compounds yield cured products having a low linear expansion coefficient and little deterioration in heat resistance due to moisture absorption, in addition to favorable heat resistance and elastic modulus. One of these aromatic amines may be used alone, and a combination of two or more such aromatic amines may be used.

When an aromatic amine is used, the blend amount of the aromatic amine, particularly in the case of a diaminodiphenylsulfone, is set so that the number of equivalents of amino group active hydrogens is preferably within a range from 0.5 to 1.5 times, and more preferably from 0.6 to 1.4 times of the number of epoxy equivalents in all of the epoxy resins to be blended in the first epoxy resin composition. When the number of equivalents of amino group active hydrogens falls within this range, elastic modulus, toughness and heat resistance of the fiber-reinforced composite obtained by curing the first heat-curable molding material can be improved.

Examples of commercially available products of 4,4'-diaminodiphenylsulfone include Seikacure S (active hydrogen equivalent weight: 62 g/eq, manufactured by Seika Corporation) and Sumicure S (active hydrogen equivalent weight: 62 g/eq, manufactured by Sumitomo Chemical Co., Ltd), whereas examples of commercially available products of 3,3'-diaminodiphenylsulfone include 3,3'-DAS (active hydrogen equivalent weight: 62 g/eq, manufactured by Mitsui Fine Chemicals, Inc.).

In addition, examples of commercially available products of other aromatic amines include MDA-220 (active hydrogen equivalent weight: 50 g/eq, manufactured by Mitsui Chemicals Inc.), jER CURE (a registered trademark) W (active hydrogen equivalent weight: 45 g/eq, manufactured by Mitsubishi Chemical Corporation), and Lonzacure (a registered trademark, this also applies below) M-DEA (active hydrogen equivalent weight: 78 g/eq), Lonzacure M-DIPA (active hydrogen equivalent weight: 92 g/eq), Lonzacure M-MIPA (active hydrogen equivalent weight: 78 g/eq) and Lonzacure DETDA 80 (active hydrogen equivalent weight: 45 g/eq) (all manufactured by Lonza Grup AG).

Examples of other amine-based curing agents that may be used as the component (E) include tris(dimethylaminomethyl)phenol, isophoronediamine and triethylenetetramine.

Further, examples of acid anhydrides that may be used as the component (E) include hydrogenated methylnadic anhydride and methylhexahydrophthalic anhydride.

### <Component (F)>

Epoxy resins described below may be blended as a component (F) in the first epoxy resin composition in order to improve the workability of the first heat-curable molding material by adjusting the viscoelasticity, and/or to improve the strength, elastic modulus, toughness and heat resistance of the fiber-reinforced composite obtained by curing the first heat-curable molding material. However, the component (F) does not include compounds in the category of the components (B) and (C).

Examples of the component (F) include bisphenol type epoxy resins that are solid at normal temperature (23°C) such as bisphenol S type epoxy resins, bisphenol E type epoxy resins, bisphenol Z type epoxy resins and bisphenol AD type epoxy resins, glycidyl ether type epoxy resins such as oxazolidone type epoxy resins, biphenyl type epoxy resins, naphthalene type epoxy resins, dicyclopentadiene type epoxy resins, phenol novolac type epoxy resins, cresol novolac type epoxy resins and trisphenolmethane type epoxy resins, as well as modified products of these epoxy resins, phenol aralkyl type epoxy resins, oxazolidone skeleton-containing epoxy resins, aliphatic epoxy resins and alicyclic epoxy resins.

Examples of epoxy resin products that may be used as the component (F) include jER 1004AF, jER 1032H60, jER 152, jER 154, YX-7700, YX-4000, YX-8000 and YED216M (all manufactured by Mitsubishi Chemical Corporation), NC-2000 and NC-3000 (both manufactured by Nippon Kayaku Co., Ltd.), YDPN-638 and TX-0911 (both manufactured by Nippon Steel Chemical & Material Co., Ltd.), Epon 165 (manufactured by Momentive Specialty Chemicals Inc.), ECN-1299 (manufactured by Huntsman Japan Co., Ltd.), HP-4032, HP-4700, HP-7200 and TSR-400 (all manufactured by DIC Corporation), AER4152, AER4151, LSA3301 and LSA2102 (all manufactured by Asahi Kasei E-Materials Corporation), ACR1348 (manufactured by Adeka Corporation), DER852 and DER858 (manufactured by the Dow Chemical Company), Celloxide (a registered trademark, this also applies below) 2021P and Celloxide 2081 (both manufactured by Daicel Corporation), and DENACOL (a registered trademark, this also applies below) EX-211, EX-212, EX-252, EX-313, EX-321, EX-411, EX-421, EX-512, EX-521, EX-612, EX-614, EX-810, EX-821, EX-830, EX-841, EX-850, EX-861, EX-911, EX-920, EX-931 and EX-941 (all manufactured by Nagase ChemteX Corporation).

One of these products may be used alone as the component (F), and a combination of two or more products may be used.

When the component (F) is used, the blend amount of the component (F) may be adjusted appropriately, for example, within a range from 1 to 30% by mass, relative to the total mass of all the epoxy resin to be blended in the first epoxy resin composition.

### <Component (G)>

A thermoplastic resin may be blended, as required, as a component (G) in the first epoxy resin composition, for the purposes of controlling resin flow during molding of the first heat-curable molding material and imparting toughness to the resulting cured product.

When the component (G) is used, the blend amount of the component (G) may be adjusted appropriately, for example, within a range from 1 to 15 parts by mass per 100 parts by mass of all the epoxy resin to be blended in the first epoxy resin composition.

Examples of the thermoplastic resin include, but are not limited to, polyamide, polyester, polycarbonate, polyethersulfone, polyphenylene ether, polyphenylene sulfide, polyetheretherketone, polyetherketone, polyimide, polytetrafluoroethylene, polyether, polyolefin, liquid crystal polymer, polyarylate, polysulfone, poly(acrylonitrile-co-styrene), polystyrene, polyacrylonitrile, polymethylmethacrylate, ABS, AES, ASA, polyvinyl chloride, polyvinylformal resin, phenoxy resin, and block polymers.

A phenoxy resin, polyethersulfone and a polyvinylformal resin can contribute to improving the resin flow controllability of the first heat-curable molding material. A phenoxy resin or polyethersulfone can enhance heat resistance and flame retardancy of fiber-reinforced composite obtained by curing the first heat-curable molding material. A polyvinylformal resin can be used for controlling tackiness of the first heat-curable molding material, and can also contribute to improving adhesion between the reinforcing fiber and the matrix resin cured product in the fiber-reinforced composite obtained by curing the first heat-curable molding material. A block polymer can improve toughness and impact resistance of the fiber-reinforced composite obtained by curing the first heat-curable molding material.

A single thermoplastic resin may be used alone, and a combination of two or more such resins may be used.

Examples of the phenoxy resin include YP-50, YP-50S, YP70, ZX-1356-2 and FX-316 (all manufactured by Nippon Steel Chemical & Material Co., Ltd.).

Examples of the polyvinylformal resin include VINYLEC (a registered trademark, this also applies below) K (average molecular weight; 59,000), VINYLEC L (average molecular weight; 66,000), VINYLEC H (average molecular weight; 73,000) and VINYLEC E (average molecular weight; 126,000) (all manufactured by JNC Corporation).

In those cases where the fiber-reinforced composite obtained by curing the first heat-curable molding material requires heat resistance exceeding 180°C, a polyethersulfone or polyetherimide can be used favorably. Specific examples of the polyethersulfone include SUMIKAEXCEL (a registered trademark, this also applies below) 3600P (average molecular weight; 16,400), SUMIKAEXCEL 5003P (average molecular weight; 30,000), SUMIKAEXCEL 5200P (average molecular weight; 35,000) and SUMIKAEXCEL 7600P (average molecular weight; 45,300) (all manufactured by Sumitomo Chemical Co., Ltd.). Examples of the polyetherimide include ULTEM (a registered trademark, this also applies below) 1000 (average molecular weight; 32,000), ULTEM 1010 (average molecular weight; 32,000) and ULTEM 1040 (average molecular weight; 20,000) (all manufactured by SABIC Innovative Plastics, Inc.).

Examples of the block polymer include Nanostrength M52, Nanostrength M52N, Nanostrength M22, Nanostrength M22N, Nanostrength 123, Nanostrength 250, Nanostrength 012, Nanostrength E20 and Nanostrength E40 (all manufactured by ARKEMA Co., Ltd.), and TPAE-8, TPAE-10, TPAE-12, TPAE-23, TPAE-31, TPAE-38, TPAE-63, TPAE-100 and PA-260 (all manufactured by T&K TOKA Co., Ltd.).

### <Optional Components>

Various conventional additives may be added to the first epoxy resin composition, provided the effects of the present invention are not impaired. For example, antioxidants and photostabilizers may be added to improve the storage stability of the first heat-curable molding material, or to suppress discoloration or degradation of the fiber-reinforced composite obtained by curing the first heat-curable molding material.

Specific examples of the antioxidants and photostabilizers include SUMILIZER (a registered trademark, this also applies below) BHT, SUMILIZER S, SUMILIZER BP-76, SUMILIZER MDP-S, SUMILIZER GM, SUMILIZER BBM-S, SUMILIZER WX-R, SUMILIZER NW, SUMILIZER BP-179, SUMILIZER BP-101, SUMILIZER GA-80, SUMILIZER TNP, SUMILIZER TPP-R and SUMILIZER P-16 (all manufactured by Sumitomo Chemical Co., Ltd.); ADEKA STAB (a registered trademark, this also applies below) AO-20, ADEKA STAB AO-30, ADEKA STAB AO-40, ADEKA STAB AO-50, ADEKA STAB AO-60, ADEKA STAB AO-70, ADEKA STAB AO-80, ADEKA STAB AO-330, ADEKA STAB PEP-4C, ADEKA STAB PEP-8, ADEKA STAB PEP-24G, ADEKA STAB PEP-36, ADEKA STAB HP-10, ADEKA STAB 2112, ADEKA STAB 260, ADEKA STAB 522A, ADEKA STAB 329K, ADEKA STAB 1500, ADEKA STAB C, ADEKA STAB135A and ADEKA STAB 3010 (all manufactured by Adeka Corporation); TINUVIN (a registered trademark, this also applies below) 770, TINUVIN 765, TINUVIN 144, TINUVIN 622, TINUVIN 111, TINUVIN 123 and TINUVIN 292 (all manufactured by Ciba Specialty Chemicals Inc.); and Fancryl (a registered trademark) FA-711M and FA-712HM (both manufactured by Hitachi Chemical Co., Ltd.).

When used, although there are no particular limitations on the blend amounts of the antioxidant or photostabilizer, each blend amount is preferably within a range from 0.001 to 5 parts by mass, and more preferably from 0.01 to 3 parts by mass, per 100 parts by mass of all the epoxy resin to be blended in the first epoxy resin composition.

An internal release agent or parting agent may also be added to the first epoxy resin composition. These components improve the releasability from the mold of the fiber-reinforced composite obtained by subjecting the first heat-curable molding material to thermocompression molding. Epoxy resins tend to exhibit strong adhesion to metals, and therefore epoxy resin cured products tend to adhere to the mold, but by using the above additives, adhesion at the interface between the mold and the epoxy resin cured product at the time of demolding can be suppressed. Specific examples of these components include ester compounds of a fatty acid and an aliphatic alcohol, ester compounds of a polyvalent carboxylic acid and an aliphatic alcohol, ester compounds of a polyhydric alcohol and a fatty acid, aliphatic alcohols, fatty acid amides, and fatty acid metal salts. The fatty acid chain may be a saturated fatty acid chain or an unsaturated fatty acid chain. In particular, compounds having a long-chain alkyl group of 5 to 40 carbon atoms are preferred, ester compounds having a long-chain alkyl group of 10 to 30 carbon atoms are more preferred, and ester compounds having a long-chain alkyl group of 12 to 20 carbon atoms are even more preferred. Specific examples include ethylene glycol distearate, stearyl citrate, methyl stearate, myristyl myristate and sorbitan monostearate. Aliphatic compounds having a hydroxy group are particularly preferred, sorbitan fatty acid esters are more preferred, and sorbitan monostearate is particularly desirable.

When used, the blend amount of each of these internal release agents or parting agents, per 100 parts by mass of all the epoxy resin to be blended in the first epoxy resin composition, is preferably within a range from 0.1 to 10 parts by mass, more preferably from 0.1 to 7 parts by mass, even more preferably from 0.1 to 6 parts by mass, and particularly preferably from 0.3 to 5 parts by mass.

Examples of other additives that may be added include conventional additives such as molecular sieves, elastomers, thermoplastic elastomers, flame retardants (such as red phosphorus, phosphazene compounds, phosphate salts and phosphate esters), silicone oils, wetting and dispersing agents, antifoaming agents, defoaming agents, mold release agents such as natural waxes, synthetic waxes, metal salts of linear fatty acids, acid amides, esters and paraffins, powders such as crystalline silica, fused silica, calcium silicate, alumina, calcium carbonate, talc and barium sulfate, inorganic fillers such as metal oxides, metal hydroxides, glass fibers, carbon nanotubes and fullerene, organic fillers such as carbon fibers and cellulose nanofibers, inorganic fillers that have been subjected to surface organic treatments, colorants such as carbon black and red iron oxide, silane coupling agents, and conductive materials. Moreover, if required, slipping agents, leveling agents, polymerization inhibitors such as hydroquinone monomethyl ether, and ultraviolet absorbents and the like may also be added.

One of these additives may be used alone, and a combination of two or more additives may be used.

### <Viscosity of Epoxy Resin Composition Prior to Thickening>

The viscosity of the first epoxy resin composition prior to thickening is preferably 25 Pa·s or less, and more preferably 23 Pa·s or less at 25°C. There is no particular lower limit for the viscosity of the first epoxy resin composition prior to thickening, but the viscosity is typically 0.1 Pa·s or more, and preferably 0.3 Pa·s or more at 25°C. For example, the viscosity of the first epoxy resin composition prior to thickening is, at 25°C, preferably within a range from 0.1 Pa·s to 25 Pa·s, and more preferably from 0.3 Pa·s to 23 Pa·s.

The viscosity of the first epoxy resin composition prior to thickening is measured in accordance with JIS Z 8803:2011.

### <Production Method for Epoxy Resin Composition>

The first epoxy resin composition can be obtained by mixing the various components described above. Examples of the mixing method include methods that use a mixer such as a triple roll mill, planetary mixer, kneader, homogenizer or homodisper.

### <Reinforcing Fiber>

There are no particular limitations on the type of reinforcing fiber used in the first heat-curable molding material, and the reinforcing fiber may be selected appropriately from the types of reinforcing fibers typically used in fiber-reinforced composite in accordance with the application for the molding material being produced. Specific example include various inorganic fibers and organic fibers such as carbon fiber, aramid fiber, nylon fiber, high-strength polyester fiber, glass fiber, boron fiber, alumina fiber and silicon nitride fiber. Among these, from the viewpoints of specific strength and specific elasticity, carbon fiber, aramid fiber, glass fiber, boron fiber, alumina fiber and silicon nitride fiber are preferred, and carbon fiber is particularly desirable. The carbon fiber may be surface-treated with a metal.

One type of reinforcing fiber may be used alone, and a combination of two or more types of fiber may be used.

The reinforcing fiber is preferably chopped reinforcing fiber bundles comprising short fibers. The length of the short fibers is preferably 0.3 cm or more and more preferably 1 cm or more, but is preferably 10 cm or less, and more preferably 5 cm or less. When the length of the short fibers is at least 0.3 cm, the mechanical properties of the fiber-reinforced composite obtained by curing the first heat-curable molding material are particularly favorable.

When the length of the short fibers is 10 cm or less, the flow properties of the first heat-curable molding material at the time of thermocompression molding are particularly favorable.

From the viewpoint of the rigidity of the fiber-reinforced composite obtained by curing the first heat-curable molding material, the strand tensile strength of the carbon fiber used for the reinforcing fiber is preferably 1 GPa or more, and more preferably 1.5 GPa or more. Although there is no particular upper limit for the strand tensile strength of the carbon fiber used for the reinforcing fiber, the strength is typically 9 GPa or less. The strand tensile modulus of the carbon fiber used for the reinforcing fiber is preferably 150 GPa or more, and more preferably 200 GPa or more, and although there is no particular upper limit, the strand tensile modulus is typically 1,000 GPa or less.

The strand tensile strength and the strand tensile modulus of the carbon fiber is measured in accordance with JIS R 7601:1986.

### <Production Method for Heat-Curable Molding Material>

Specific examples of the first heat-curable molding material include a prepreg, tow prepreg, SMC and BMC. Particularly preferred forms include SMC and BMC.

The SMC may be produced using the first epoxy resin composition as a raw material, for example, via the procedure described below.

First, two films each having the first epoxy resin composition applied uniformly to one surface are prepared.

Next, chopped reinforcing fiber bundles are scattered randomly across the surface of one film to which the first epoxy resin composition has been applied, thus obtaining a sheet comprising chopped reinforcing fiber bundles.

Subsequently, the two films are bonded together with the surfaces to which the first epoxy resin composition has been applied facing inward, thereby sandwiching the sheet of the chopped reinforcing fiber bundles between the films, and the bonded films are then compressed using a roller, thereby impregnating the sheet of the chopped reinforcing fiber bundles with the first epoxy resin composition.

Finally, the first epoxy resin composition is thickened to obtain an SMC.

A BMC can be produced by making a bulk prepared by mixing chopped reinforcing fiber bundles and the first epoxy resin composition, and subsequently thickening the first epoxy resin composition. Various conventionally known methods may be employed for making the bulk, but from the viewpoints of fiber dispersion and productivity, a method that conducts the mixing using a press kneader is preferred. The mixing using a press kneader may be conducted under heating if required. The temperature during mixing is preferably lower than the temperature at which the epoxy resin starts to cure, and for example, is typically from 10 to 35°C. The pressure during mixing with a press kneader need not necessarily be greater than atmospheric pressure, but in those cases where the viscosity of the first epoxy resin composition is high and impregnation of the chopped reinforcing fiber bundles is difficult, a pressure greater than atmospheric pressure may be used.

After preparing the bulk, the first epoxy resin composition may be thickened to obtain a BMC.

### <Fiber-Reinforced Composite>

Examples of the method used for curing the first heat-curable molding material to obtain a fiber-reinforced composite include a press molding method, autoclave molding method, bagging molding method, wrapping tape method, internal pressure molding method and sheet wrap molding method, and a press molding method is particularly preferred.

The fiber-reinforced composite obtained by curing the first heat-curable molding material can be used favorably in general industrial applications, sporting applications, and aerospace applications. More specifically, within general industrial applications, the fiber-reinforced composite can be used favorably as structural materials for vehicles such as automobiles, marine vessels and railway cars, as well as drive shafts, leaf springs, wind turbine blades, pressurized vessels, fly wheels, papermaking rollers, roofing materials, cables, and repair and reinforcing materials and the like. Moreover, within sporting applications, the fiber-reinforced composite can be used favorably for golf shafts, fishing rods, rackets for tennis, badminton, or the like, sticks for hockey or the like, and ski poles.

### 2. Heat-Curable Epoxy Resin Composition for FRP

The heat-curable epoxy resin composition for FRP of one aspect of the present invention is prepared by blending a bisphenol type epoxy resin, a polyol and a polyisocyanate, and is a heat-curable epoxy resin composition for FRP that has a viscosity of 25 Pa·s or less at 25°C, wherein the polyol has a structure in which a modification is applied to an epoxy resin compound contained in the bisphenol type epoxy resin, the modification being a ring-opening of an epoxy group that causes formation of a hydroxy group. In the following description, this epoxy resin composition is called the "second epoxy resin composition".

The heat-curable epoxy resin composition for FRP of another aspect of the present invention is prepared by blending a bisphenol type epoxy resin, a polyol and a polyisocyanate, and is a heat-curable epoxy resin composition for FRP that has a viscosity of 25 Pa·s or less at 25°C, wherein the polyol has a structure in which a modification is applied to an epoxy resin compound which is soluble in the bisphenol type epoxy resin, the modification being a ring-opening of an epoxy group causing formation of a hydroxy group. In the following description, this epoxy resin composition is called the "third epoxy resin composition".

It should be noted that there are no limitations on the synthetic pathway for the polyol that is blended in the second and third epoxy resin compositions as an essential component. The respective limitations that the polyol "has a structure in which a modification is applied to the epoxy resin compound" and that "the modification is a ring-opening of an epoxy group causing formation of a hydroxy group" are limitations that relate solely to the structure of the polyol. The polyol need not actually be synthesized via a ring-opening process of an epoxy group causing formation of a hydroxy group, and is not even required to be a compound produced by synthesizing an epoxy resin compound, and then subjecting that epoxy resin composition to a modification.

The polyol to be blended in the second and third epoxy resin compositions is not limited to only the polyol having a structure in which a modification is applied to an epoxy resin compound, and may also include a polyol having another structure.

Preferred examples of the bisphenol type epoxy resin to be blended in the second and third epoxy resin compositions include a bisphenol type epoxy resin which is liquid at normal temperature (23°C) and is blended as the component (B) in the first epoxy resin composition described above.

The preferred blend amount of the bisphenol type epoxy resin that is liquid at normal temperature in the second and third epoxy resin compositions is the same as the preferred blend amount of the component (B) in the first epoxy resin composition.

In addition to the bisphenol type epoxy resin that is liquid at normal temperature, bisphenol type epoxy resins that are solid at normal temperature such as bisphenol S type epoxy resins, bisphenol E type epoxy resins, bisphenol Z type epoxy resins and bisphenol AD type epoxy resins may be blended in the second and third epoxy resin composition.

In the second epoxy resin composition, the polyol having a structure in which a modification is applied to the epoxy resin compound contained in the bisphenol type epoxy resin blended in the second epoxy resin composition is added as an essential component. The modification is a ring-opening of an epoxy group causing formation of a hydroxy group. The number of ring-opened epoxy groups may be one, or two or more.

In one preferred example, when a bisphenol A type epoxy resin is blended in the second epoxy resin composition, one or more polyol compound selected from among polyols represented by the above formulas (a2-1) and (a2-2) may be blended therein.

While a bisphenol A type epoxy resin contains an epoxy resin compound represented by formula (b) shown above, the polyol represented by the above formula (a2-1) has a structure in which a modification is applied to the epoxy resin compound represented by formula (b), wherein the modification is a ring-opening of one of the two epoxy groups to form a hydroxy group and a chloro group.

The polyol represented by the above formula (a2-2) also has a structure in which a modification is applied to the epoxy resin compound represented by formula (b), wherein the modification is a ring-opening of each of the two epoxy groups to form a hydroxy group and a chloro group.

The hydroxy group(s) formed by these modifications typically have higher reactivity than the hydroxy groups of the epoxy resin compound that constitutes the bisphenol A type epoxy resin (namely, the hydroxy groups bonded to carbon atoms within the main chain), and therefore the second epoxy resin composition in which the polyol represented by formula (a2-1) or formula (a2-2) is blended together with a polyisocyanate in the epoxy resin composition exhibits favorable thickening properties.

It is thought that a similar effect will also be obtained when a chlorine atom of the polyol represented by formula (a2-1) or formula (a2-2) is substituted with a different halogen atom, a hydrogen atom, a hydroxy group, or an alkyl group having comparatively few carbon atoms.

It should be noted that the bisphenol A type epoxy resin may be a mixture of a plurality of epoxy resin compounds each represented by the above formula (b) but having different values for n, whereas the second epoxy resin composition containing such a bisphenol A type epoxy resin may contain only one polyol having a structure in which the aforementioned modification (namely, a ring-opening of an epoxy group causing formation of a hydroxy group) is applied to one of the plurality of epoxy resin compounds (for example, the compound in which n is 1).

In the third epoxy resin composition, the polyol having a structure in which a modification is applied to an epoxy resin compound which is soluble in the bisphenol type epoxy resin to be blended in the third epoxy resin composition is added as an essential component. The modification is a ring-opening of an epoxy group that causes formation of a hydroxy group, and may be a ring-opening of an epoxy group that also causes formation of a halogen group such as a chloro group or an alkyl group having comparatively few carbon atoms as another substituent besides the hydroxy group, or may be a ring-opening of an epoxy group forms causes formation of only a hydroxy group as a substituent.

This polyol that is added in the third epoxy resin composition as an essential component preferably exhibits favorable compatibility with the bisphenol type epoxy resin. Accordingly, this polyol preferably has a structure in which the aforementioned modification is applied a glycidyl ether type epoxy resin compound, and more preferably has a structure in which the aforementioned modification is applied to an epoxy resin compound having a bisphenol skeleton.

This polyol that is blended in the third epoxy resin composition as an essential component may have a structure in which the aforementioned modification is applied to an epoxy resin compound not contained in the epoxy resin to be blended in the third epoxy resin composition.

For example, when a bisphenol A type epoxy resin is added in the third epoxy resin composition as the bisphenol type epoxy resin, the polyol blended in the third epoxy resin composition may have structure in which the aforementioned modification is applied to an epoxy resin compound having a bisphenol F skeleton. However, the epoxy resin compound having a bisphenol F skeleton must be soluble in the bisphenol A type epoxy resin blended in the third epoxy resin composition.

Preferred examples of the isocyanate blended in the second and third epoxy resin compositions include the polyisocyanates blended as the component (D) in the first epoxy resin composition described above. The preferred blend amount of the polyisocyanate in the second and third epoxy resin compositions is the same as the preferred blend amount of the component (D) in the first epoxy resin composition.

In the second and third epoxy resin compositions, an epoxy resin curing agent is usually blended in addition to the bisphenol type epoxy resin, the polyol and the polyisocyanate.

Preferred examples of the epoxy resin curing agent to be blended in the second and third epoxy resin compositions include the epoxy resin curing agents to be blended as the component (E) in the first epoxy resin composition described above.

The preferred blend amount of the epoxy resin curing agent in the second and third epoxy resin compositions is the same as the preferred blend amount of the component (E) in the first epoxy resin composition described above.

In the second and third epoxy resin compositions, an amine type epoxy resin may also be blended in addition to the bisphenol type epoxy resin, the polyol and the polyisocyanate.

Preferred examples of the amine type epoxy resins that may be added in the second and third epoxy resin compositions include the amine type epoxy resins that may be blended as the component (C) in the first epoxy resin composition described above.

When blended in the second and third epoxy resin compositions, the preferred blend amount of the amine type epoxy resin is the same as the preferred blend amount of the component (C) in the first epoxy resin composition described above.

One or more epoxy resins other than the bisphenol type epoxy resin may also be blended in the second and third epoxy resin compositions, according to need, the epoxy resins including glycidyl ether type epoxy resins such as oxazolidone type epoxy resins, biphenyl type epoxy resins, naphthalene type epoxy resins, dicyclopentadiene type epoxy resins, phenol novolac type epoxy resins, cresol novolac type epoxy resins and trisphenolmethane type epoxy resins, as well as modified products of these epoxy resins, phenol aralkyl type epoxy resins, oxazolidone skeleton-containing epoxy resins, aliphatic epoxy resins and alicyclic epoxy resins.

In the second and third epoxy resin compositions a thermoplastic resin may also be blended in addition to the bisphenol type epoxy resin, the polyol and the polyisocyanate.

Preferred examples of thermoplastic resins that may be blended in the second and third epoxy resin compositions include the thermoplastic resins that may be added as the component (G) in the first epoxy resin composition described above.

When blended in the second and third epoxy resin compositions, the preferred blend amount of the thermoplastic resin is the same as the preferred blend amount of the component (G) in the first epoxy resin composition described above.

In the second and third epoxy resin compositions any of various conventional additives may also be blended in addition to the bisphenol type epoxy resin, the polyol and the polyisocyanate.

Specific examples of additives that may be blended in the second and third epoxy resin compositions and the preferred blend amounts of those additives are the same as those described above for the additives that may be blended as optional components in the first epoxy resin composition.

The second and third epoxy resin compositions can be obtained by mixing the various components including the bisphenol type epoxy resin, the polyol and the polyisocyanate, and examples of the mixing method include methods that use a mixer such as a triple roll mill, planetary mixer, kneader, homogenizer or homodisper.

The viscosity at 25°C of the second and third epoxy resin compositions is typically 25 Pa·s or less, and preferably 23 Pa·s or less. There is no particular lower limit for the viscosity at 25°C of the second and third epoxy resin compositions, but the viscosity is typically 0.1 Pa·s or more, and preferably 0.3 Pa·s or more. For example, the viscosity at 25°C of the second and third epoxy resin compositions is preferably within a range from 0.1 Pa·s to 25 Pa·s, and more preferably from 0.3 Pa·s to 23 Pa·s.

The viscosity at 25°C of the second and third epoxy resin compositions is measured in accordance with JIS Z 8803:2011.

The second and third epoxy resin compositions may, when left to stand at 23°C, exhibit an increase in viscosity at 23°C to 5,000 Pa·s or more within 21 days.

The second and third epoxy resin compositions may, when left to stand at 23°C, exhibit an increase in viscosity at 23°C to 5,000 Pa·s or more within 14 days.

The second and third epoxy resin compositions may, when left to stand at 23°C, exhibit an increase in viscosity at 23°C to 5,000 Pa·s or more within 7 days.

The second and third epoxy resin compositions may, when left to stand at 23°C, exhibit a viscosity at 23°C after standing for 21 days of 150,000 Pa·s or less, and preferably 70,000 Pa·s or less.

A heat-curable molding material (hereafter called the "second heat-curable molding material") in which reinforcing fibers are dispersed in a matrix comprising the partially-cured product of the second or third epoxy resin composition can be obtained, for example, by a method comprising impregnating the reinforcing fibers with the second or third epoxy resin composition, and then thickening the resin composition to form a partially-cured product. Examples of reinforcing fibers that may be used in this second heat-curable molding material include the same reinforcing fibers as those used in the first heat-curable molding material described above.

Specific examples of the second heat-curable molding material include a prepreg, tow prepreg, SMC and BMC.

An SMC or BMC using the second or third epoxy resin composition as a raw material can be produced by the same procedure as that for producing an SMC or BMC using the aforementioned first epoxy resin composition as a raw material.

Examples of the molding method used for obtaining a molded article (FRP) from the second heat-curable molding material include a press molding method, autoclave molding method, bagging molding method, wrapping tape method, internal pressure molding method and sheet wrap molding method. The FRP comprising the molded article of the second heat-curable molding material can be used favorably for components (including structural components) in transport equipment such as aircraft, automobiles, marine vessels and railway cars.

### EXAMPLES

The present invention is described below in further detail using a series of examples, but the present invention is not limited to these examples. The raw materials used in the examples and comparative examples are shown in Table 1.

**[Table 1]**

| | Abbreviation | Substance / material name | Manufacturer | Product name |
|---|---|---|---|---|
| Component (Al) | 828XA/A | Epoxy compound represented by formula (a1) (wherein n is an integer of 0 to 5, and R is a chlorine atom) | Mitsubishi Chemical | jER828XA (Component (Al) content is 17.3% by mass, and the remainder is the same as jER828.) |
| Component (B) | 828XA/B | Bisphenol A type liquid epoxy resin | | |
| | 828 | Bisphenol A type liquid epoxy resin | Mitsubishi Chemical | jER828 |
| | 827 | Bisphenol F type liquid epoxy resin | Mitsubishi Chemical | jER827 |
| Component (C) | TETRAD-X | N,N,N',N'-tetraglycidyl-m-xylylenediamine | Mitsubishi Gas Chemical | TETRAD-X |
| | 604 | Tetraglycidyl\ diaminodiphenylmethane | Mitsubishi Chemical | jER604 |
| Component (D) | MI | Diphenylmethane diisocyanate | BASF INOAC Polyurethanes | Lupranate MI |
| | IPDI | Isophorone diisocyanate | Tokyo Chemical Industry | Isophorone diisocyanate |
| Component (E) | DICY | Dicyandiamide | Air Products and Chemicals | DICYANEX 1400F |
| | 2MZA-PW | 2,4-diamino-6-[2'-methylimidazolyl-(1')]-ethyl-s-triazine | Shikoku Chemicals | 2MZA-PW |
| | 3010 | Tris(dimethylaminomethyl)phenol | Mitsubishi Chemical | jER CURE 3010 |
| Component (F) | 216M | 1,6-hexanediol diglycidyl ether | Mitsubishi Chemical | YED216M |
| | EX-612 | Sorbitol polyglycidyl ether | Nagase ChemteX | Denacol EX-612 |
| | 1004AF | Bisphenol A type solid epoxy resin | Mitsubishi Chemical | jER1004AF |
| Optional components | 4A | Molecular sieve | Union Showa | 4A powder |
| | EG | Ethylene glycol | Nacalai Tesque | - |

### (Example 1)

Using 828XA/A as the component (A1), 828XA/B and 828 as the component (B), MI as the component (D), and DICY, 2MZA-PW and 3010 as the component (E), a heat-curable epoxy resin composition was produced in the manner described below. The blend composition (mass ratio) was as shown in Table 2.

Here, 828XA/A and 828XA/B respectively refer to the component (A1) and the component (B) contained in jER828XA manufactured by Mitsubishi Chemical Corporation.

First, a portion of the component (B) and all of the component (E) were mixed in a container such that the mass ratio between the component (B) and the component (E) was1:1. The resulting mixture was kneaded further on a triple roll mill, thus obtaining a curing agent-containing masterbatch.

Subsequently, the component (A1), the remainder of the component (B), the above curing agent-containing masterbatch, and the other components were mixed in a flask to obtain an epoxy resin composition.

Using a Brookfield viscometer (DV2T, manufactured by EKO Instruments Co., Ltd.), the viscosity of the epoxy resin composition at 23°C was measured, in accordance with JIS Z 8803:2011, immediately following preparation, and then following thickening by standing at 23°C.

The results are shown in Table 2. The number of elapsed days shown in Table 2 represents the number of days that had elapsed from immediately following preparation of the epoxy resin until the viscosity measurement was performed, or in other words, represents the thickening time.

### (Examples 2 to 12, Comparative Examples 1 to 4)

Epoxy resin compositions according to Examples 2 to 12 and Comparative Examples 1 to 4 were each prepared in a similar manner to Example 1, by first preparing a curing agent-containing masterbatch by mixing a portion of the component (B) and all of the component (E) such that the mass ratio between the component (B) and the component (E) was 1:1, and then mixing all of the materials. The blend composition of each of the epoxy resin compositions according to Examples 2 to 12 and Comparative Examples 1 to 4, and the results of measuring the viscosity of each epoxy resin composition immediately after preparation and then after thickening in a similar manner to Example 1 are shown in Table 2 or Table 3.

**[Table 2]**

| | | | Examples | | | | | | | |
|---|---|---|---|---|---|---|---|---|---|---|
| | | | 1 | 2 | 3 | 4 | 5 | 6 | 7 | 8 |
| Component (Al) | 828XA/A | | 8.7 | 14.6 | 14.6 | 13.7 | 13.7 | 13.7 | 13.5 | 12.3 |
| Component (B) | 828XA/B | | 91.3 | 85.4 | 85.4 | 81.3 | 81.3 | 65.3 | 64.5 | 58.7 |
| | 828 | | | | | | | | | |
| | 827 | | 0 | 0 | 0 | 0 | 0 | 16 | 16 | 16 |
| Component (C) | 604 | | 0 | 0 | 0 | 5 | 0 | 0 | 0 | 0 |
| | TETRAD-X | | 0 | 0 | 0 | 0 | 5 | 5 | 5 | 10 |
| Component (F) | 216M | | 0 | 0 | 0 | 0 | 0 | 0 | 1 | 3 |
| | EX-612 | | 0 | 0 | 0 | 0 | 0 | 0 | 0 | 0 |
| | 1004AF | | 0 | 0 | 0 | 0 | 0 | 0 | 0 | 0 |
| Component (D) | MI | | 15 | 15 | 10 | 10 | 10 | 20 | 15 | 10 |
| | IPDI | | 0 | 0 | 0 | 0 | 0 | 0 | 0 | 0 |
| Component (E) | DICY | | 4 | 4 | 4 | 4 | 4 | 4 | 4 | 4 |
| | 2MZA-PW | | 4 | 4 | 4 | 4 | 4 | 4 | 4 | 4 |
| | 3010 | | 0.1 | 0.1 | 0.1 | 0.1 | 0.1 | 0.05 | 0 | 0 |
| Optional components | 4A | | 0 | 0 | 0 | 0 | 0 | 0 | 0 | 1 |
| | EG | | 0 | 0 | 0 | 0 | 0 | 0 | 0 | 0 |
| Viscosity (Pa. s) | Number of elapsed days | 0 | 9.1 | 5 | 17.3 | 16.8 | 17.7 | 5.1 | 7.1 | 6.6 |
| | | 1 | 382 | 5600 | - | 1000 | 1363 | 438 | - | 238 |
| | | 4 | - | 11000 | - | - | - | - | - | 883 |
| | | 7 | 1828 | 19027 | 7440 | 6008 | 9136 | 5752 | 6192 | - |
| | | 14 | 3048 | 36736 | 8640 | 9296 | 19960 | 18200 | 15997 | 3992 |
| | | 21 | 5994 | 54445 | - | - | - | 30240 | 54560 | 7848 |

**[Table 3]**

| | | | Examples | | | | Comparative examples | | | |
|---|---|---|---|---|---|---|---|---|---|---|
| | | | 9 | 10 | 11 | 12 | 1 | 2 | 3 | 4 |
| Component (A1) | 828XA/A | | 12.3 | 12.3 | 11.4 | 11.4 | 0 | 0 | 0 | 0 |
| Component (B) | 828XA/B | | 58.7 | 58.7 | 54.6 | 54.6 | 0 | 0 | 0 | 0 |
| | 828 | | | | | | 100 | 85 | 100 | 50 |
| | 827 | | 16 | 16 | 16 | 16 | 0 | 0 | 0 | 0 |
| Component (C) | 604 | | 0 | 0 | 0 | 0 | 0 | 0 | 0 | 0 |
| | TETRAD-X | | 10 | 10 | 15 | 15 | 0 | 0 | 0 | 0 |
| Component (F) | 216M | | 3 | 3 | 3 | 3 | 0 | 10 | 0 | 0 |
| | EX-612 | | 0 | 0 | 0 | 0 | 0 | 0 | 0 | 50 |
| | 1004AF | | 0 | 0 | 0 | 0 | 0 | 5 | 0 | 0 |
| Component (D) | MI | | 15 | 15 | 15 | 15 | 0 | 7 | 20 | 15 |
| | IPDI | | 0 | 0 | 0 | 0 | 29.2 | 0 | 0 | 0 |
| Component (E) | DICY | | 4 | 4 | 4 | 4 | 0 | 4 | 4 | 4 |
| | 2MZA-PW | | 4 | 4 | 4 | 4 | 6 | 4 | 4 | 4 |
| | 3010 | | 0 | 0 | 0 | 0 | 0 | 0 | 0.1 | 0.1 |
| Optional components | 4A | | 1 | 0 | 0 | 1 | 0 | 0 | 0 | 0 |
| | EG | | 0 | 0 | 0 | 0 | 5.0 | 0 | 0 | 0 |
| Viscosity (Pa·s) | Number of elapsed days | 0 | 4.8 | 5.6 | 5.5 | 5.2 | 1.2 | 8.1 | 3.5 | 8.4 |
| | | 1 | 286 | 345 | 366 | 268 | 23 | 53 | 42 | 205 |
| | | 4 | 1241 | - | - | 1181 | - | 118 | - | - |
| | | 7 | 2816 | 13200 | 18750 | 28829 | 461 | 199 | 63 | 916 |
| | | 14 | 19070 | 70960 | 111000 | 29080 | 935 | 382 | 112 | 2392 |
| | | 21 | 70000 | - | - | 120200 | 1413 | 565 | 159 | 3738 |

As shown in Tables 2 and 3, the epoxy resin compositions according to the Examples partially cured at 23°C, within one day after preparation in fast case, or within 21 days after preparation even in slow case, whereas the epoxy resins of Comparative Examples 1 to 4, which did not contain the component (A1), did not reach a partially-cured state even after 21 days had elapsed from preparation.

For example, comparing Examples 1 and 2 with Comparative Example 3, it is evident that by blending the component (Al) together with the polyisocyanate (D), the thickening of the epoxy resin composition was remarkably accelerated.

In the epoxy resin composition of Comparative Example 1, in which the polyol blended together with the polyisocyanate (D) was ethylene glycol, the progression of the thickening was slow. This is probably because there are comparatively large differences in molecular structures or polarities, resulting in unsatisfactory compatibility between the polyol and the bisphenol type epoxy resin (B).

In the epoxy resin composition of Comparative Example 2, the bisphenol A type solid epoxy resin 1004AF was added. This bisphenol type solid epoxy resin is a polyol compound having a plurality of hydroxy groups bonded to the carbon atoms that constitute the main chain, but the thickening effect when combined with the polyisocyanate (D) did not seem to be particularly large.

The epoxy resin composition of Comparative Example 4 contained the sorbitol polyglycidyl ether EX-612 as half of the mass of all the blended epoxy resin. Although EX-612 presumably contains a polyol component, the thickening of the epoxy resin composition of Comparative Example 4 was slow compared to the epoxy resin compositions of the Examples.

Comparison between Example 1 and Example 2 evidently shows that the thickening of the epoxy resin composition of Example 1 with a relatively smaller blend amount of the component (Al) was clearly slower.

Comparison between Example 8 and Example 9 evidently shows that the thickening of the epoxy resin composition of Example 8 with a relatively smaller blend amount of the isocyanate (D) was clearly slower.

Comparison among Examples 1 to 12 evidently shows that excluding the component (A1) and the polyisocyanate (D), none of the other components had a significant effect on the thickening rate.

Based on the above results, it is clear that in the epoxy resin compositions of Examples 1 to 12, the reaction between the component (Al) and the polyisocyanate (D) correlates with the thickening, and that the partially-cured products of these epoxy resin compositions each contains a reaction product of the component (Al) and the component (D).

### INDUSTRIAL APPLICABILITY

The heat-curable molding material according to an embodiment of the present invention can be used in the production of components (including structural components) for transport equipment such as automobiles, marine vessels, railway cars and aircraft.

The heat-curable epoxy resin composition for FRP according to an embodiment of the present invention can be used as a raw material for FRP used as components (including structural components) for transport equipment such as automobiles, marine vessels, railway cars and aircraft.

## Claims

1. A heat-curable molding material comprising:
a matrix resin containing a reaction product (I) of an epoxy compound (Al) represented by general formula (a1) shown below and a polyisocyanate (D), and
a reinforcing fiber: 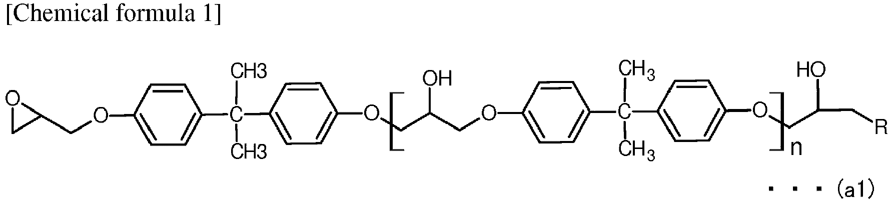
wherein n represents an integer of 0 or more, and R represents a hydroxy group, a halogen atom, or an alkyl group having 1 to 10 carbon atoms.

2. The heat-curable molding material according to Claim 1, wherein in the formula (a1), n is an integer of 0 to 5, and R is a chlorine atom.

3. The heat-curable molding material according to Claim 1 or 2, wherein a viscosity at 23°C of the matrix resin is within a range from 5,000 to 150,000 Pa·s.

4. The heat-curable molding material according to any one of Claims 1 to 3, wherein the matrix resin is a partially-cured product of a heat-curable epoxy resin composition in which a bisphenol type liquid epoxy resin (B) is blended.

5. The heat-curable molding material according to any one of Claims 1 to 4, wherein the matrix resin is a partially-cured product of a heat-curable epoxy resin composition comprising an epoxy resin compound represented by formula (b) shown below: 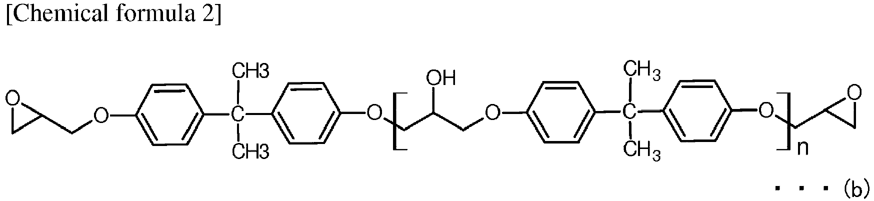 wherein n represents an integer of 0 to 5.

6. The heat-curable molding material according to Claim 4 or 5, wherein an amine type epoxy resin is blended in the heat-curable epoxy resin composition.

7. The heat-curable molding material according to any one of Claims 1 to 6, wherein the reinforcing fiber is a carbon fiber.

8. The heat-curable molding material according to any one of Claims 1 to 7, which is a sheet molding compound.

9. The heat-curable molding material according to any one of Claims 1 to 7, which is a bulk molding compound.

10. A fiber-reinforced composite obtained by molding the heat-curable molding material according to any one of Claims 1 to 9.

11. A heat-curable epoxy resin composition for a fiber-reinforced plastic, prepared by blending a bisphenol type epoxy resin, a polyol and a polyisocyanate, and having a viscosity of 25 Pa·s or less at 25°C, wherein
the polyol has a structure in which a modification is applied to an epoxy resin compound contained in the bisphenol type epoxy resin, the modification being a ring-opening of an epoxy group causing formation of a hydroxy group.

12. A heat-curable epoxy resin composition for a fiber-reinforced plastic, prepared by blending a bisphenol type epoxy resin, a polyol and a polyisocyanate, and having a viscosity of 25 Pa·s or less at 25°C, wherein
the polyol has a structure in which a modification is applied to an epoxy resin compound which is soluble in the bisphenol type epoxy resin, the modification being a ring-opening of an epoxy group causing formation of a hydroxy group.

13. The heat-curable epoxy resin composition for a fiber-reinforced plastic according to Claim 12, wherein the polyol has a structure in which the modification is applied to a diglycidyl ether type epoxy resin compound that may have a bisphenol type skeleton.

14. The heat-curable epoxy resin composition for a fiber-reinforced plastic according to any one of Claims 11 to 13, wherein the modification is a ring-opening of an epoxy group that causes formation of a hydroxy group and a halogen group.

15. The heat-curable epoxy resin composition for a fiber-reinforced plastic according to Claim 14, wherein the halogen group is a chloro group.

16. The heat-curable epoxy resin composition for a fiber-reinforced plastic according to any one of Claims 11 to 15, wherein the polyol comprises at least one polyol selected from among polyols represented by formula (a2-1) shown below and polyols represented by formula (a2-2) shown below: 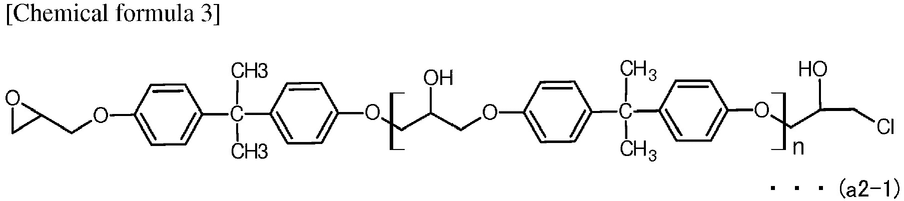 wherein n represents an integer of 1 or more, 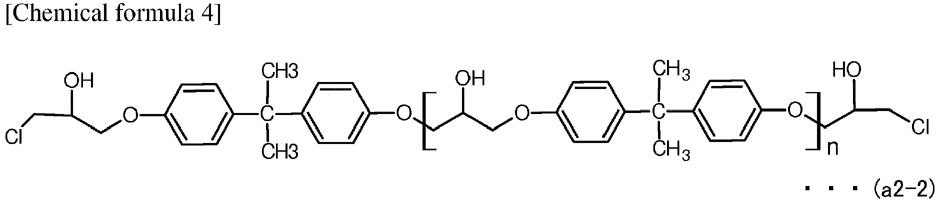 wherein n represents an integer of 0 or more.

17. The heat-curable epoxy resin composition for a fiber-reinforced plastic according to Claim 16, wherein in formula (a2-1) and formula (a2-2), n is 5 or less.

18. The heat-curable epoxy resin composition for a fiber-reinforced plastic according to any one of Claims 11 to 17, wherein the bisphenol type epoxy resin comprises an epoxy resin compound represented by formula (b) shown below: 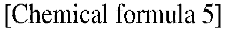 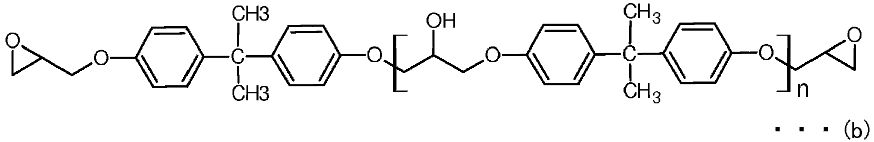 wherein n represents an integer of 0 or more.

19. The heat-curable epoxy resin composition for a fiber-reinforced plastic according to Claim 18, wherein in formula (b), n is an integer of 0 to 5.

20. The heat-curable epoxy resin composition for a fiber-reinforced plastic according to any one of Claims 11 to 19, wherein an amine type epoxy resin is blended in the heat-curable epoxy resin composition.

21. The heat-curable epoxy resin composition for a fiber-reinforced plastic according to any one of Claims11 to 20, wherein when left to stand at 23°C, the viscosity at 23°C increases to 5,000 Pa·s or more within 21 days.

22. The heat-curable epoxy resin composition for a fiber-reinforced plastic according to any one of Claims11 to 20, wherein when left to stand at 23°C, the viscosity at 23°C increases to 5,000 Pa·s or more within 14 days.

23. The heat-curable epoxy resin composition for a fiber-reinforced plastic according to any one of Claims11 to 20, wherein when left to stand at 23°C, the viscosity at 23°C increases to 5,000 Pa·s or more within 7 days.

24. The heat-curable epoxy resin composition for a fiber-reinforced plastic according to any one of Claims 11 to 23, wherein when left to stand at 23°C, the viscosity at 23°C after 21 days is 150,000 Pa·s or less, and preferably 70,000 Pa·s or less.

25. A production method for a heat-curable molding material, the method comprising impregnating a reinforcing fiber with the heat-curable epoxy resin composition for a fiber-reinforced plastic according to any one of Claims 11 to 24, and partially curing the heat-curable epoxy resin composition for a fiber-reinforced plastic with which the reinforcing fiber is impregnated.

26. The production method for a heat-curable molding material according to Claim 25, wherein the reinforcing fiber is a carbon fiber.

27. The production method according to Claim 25 or 26, wherein the heat-curable molding material is a sheet molding compound or a bulk molding compound.

28. A heat-curable molding material comprising a partially-cured product of the heat-curable epoxy resin composition for a fiber-reinforced plastic according to any one of Claims 11 to 24 and a reinforcing fiber.

29. The heat-curable molding material according to Claim 28, wherein the reinforcing fiber is a carbon fiber.

30. The heat-curable molding material according to Claim 28 or 29, which is a sheet molding compound or a bulk molding compound.

31. Fiber-reinforced plastic comprising a molded article of the heat-curable molding material according to any one of Claims 28 to 30.

32. The fiber-reinforced plastic according to Claim 31, which is a component of a transport machine.
